# EUROPEAN PATENT APPLICATION

(11) **EP 3 434 812 A2**
(43) Date of publication of application: **30.01.2019**
(21) Application number: 18186090.9
(22) Date of filing: 27.07.2018
(51) Int. Cl.: C25B 11/02, C25B 15/08, C25B 1/04, F02M 25/12, F02B 43/10

(54) **METHOD AND MEANS FOR INCREASING THE EFFICIENCY OF INTERNAL COMBUSTION ENGINES**

(30) Priority: 28.07.2017 GB 201712148
(71) Applicant: Munro, Jason John, Bovey Tracey Devon TQ13 9NW (GB)
(72) Inventor: Munro, Jason John, Bovey Tracey Devon TQ13 9NW (GB)
(74) Representative: Brown, Michael Stanley

(57) **Abstract**

The efficiency of an internal combustion engine is improved by positioning an electrolysis cell adjacent the engine. The electrolysis cell includes an elongated positive electrode (15) contained within a sheath (16) the interior of which communicates with the atmosphere to permit the flow of oxygen from the cell into the atmosphere and a negative electrode (18) so arranged as to permit the flow of hydrogen to the internal combustion engine.

## Description

### Field of the Invention

The present invention relates to a method and means for increasing the efficiency of internal combustion engines.

The objects of the present invention include the provision of an improved method and means for improving the efficiency of internal combustion engines and, at the same time, providing environmental benefits.

### Summary of the Invention

According to a first aspect of the present invention there is provided a method of improving the efficiency of an internal combustion engine which includes positioning an electrolysis cell adjacent the engine, the electrolysis cell including an elongated positive electrode contained within a sheath the interior of which communicates with the atmosphere to permit the flow of oxygen from the cell into the atmosphere and a negative electrode so arranged as to permit the flow of hydrogen to the internal combustion engine.

According to a second aspect of the present invention there is provided an electrolysis cell that can be positioned, in use, adjacent an internal combustion engine, the electrolysis cell including an elongated positive electrode contained within a sheath the interior of which communicates with the atmosphere to permit the flow of oxygen from the cell into the atmosphere and a negative electrode so arranged as to permit the flow of hydrogen to the internal combustion engine.

The electrolysis cell preferably includes a housing in which an electrolyte solution is contained, there being an inlet at the top of the housing for the introduction of the electrolyte into the housing and an outlet at the top of the housing for the flow of hydrogen to the combustion engine.

The positive electrode is preferably secured in position at the top of the housing by means of a fastener that is formed with a vent to permit the flow of oxygen from within the sheath into the atmosphere.

According to a third aspect of the present invention there is provided a method of improving the efficiency of an internal combustion engine which includes positioning an electrolysis cell adjacent the engine, the electrolysis cell having two communicating compartments, with an elongated positive electrode contained within one compartment and an elongated negative electrode contained within the other compartment with the arrangement such as to permit the flow of oxygen from the one compartment to the atmosphere and the flow of hydrogen from the other compartment to the internal combustion engine.

According to a fourth aspect of the present invention there is provided an electrolysis cell that can be positioned, in use, adjacent an internal combustion engine, the electrolysis cell having two communicating compartments, with an elongated positive electrode contained within one compartment and an elongated negative electrode contained within the other compartment with the arrangement such as to permit the flow of oxygen from the one compartment to the atmosphere and the flow of hydrogen from the other compartment to the internal combustion engine.

The two compartments are preferably disposed side by side and communicate with one another solely adjacent the lower ends thereof.

Each of the compartments is preferably supplied with electrolyte solution from a separate chamber, with the arrangement such that oxygen is caused to flow from the one compartment to its respective chamber and hydrogen is caused to flow from the other compartment to its respective chamber.

### Brief Description of the Drawings

Figure 1 is a diagrammatic view of a first embodiment of an electrolysis cell in accordance with the present invention,
Figure 2 is a detail view of the top of the positive electrode of the cell shown in Figure 1, and
Figure 3 is a diagrammatic view of a second embodiment of an electrolysis cell in accordance with the present invention.

### Description of the Preferred Embodiments

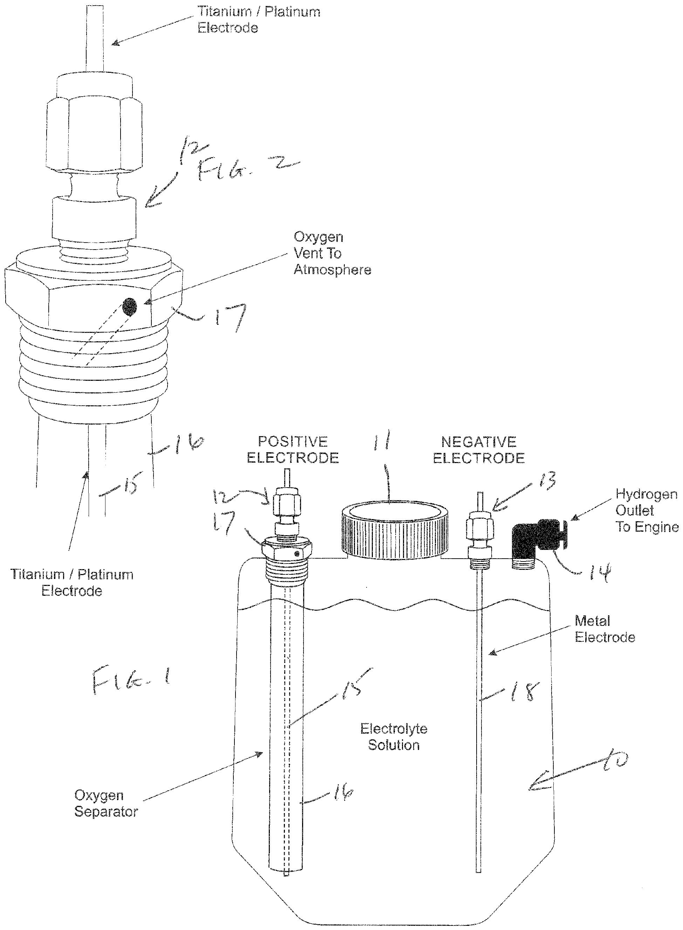

The electrolysis cell shown in Figures 1 and 2 includes a housing 10 at the top of which there is a removable cap 11 , a positive output connection 12, a negative output connection 13 and an outlet 14 to which is connected a pipe (not shown) for the flow of hydrogen from the interior of the housing 10 to an internal combustion engine (not shown) for the addition of the hydrogen generated in the cell to the fuel being supplied, in operation, to the internal combustion engine. The electrolyte solution within the housing 10 is typically dilute potassium hydroxide solution.

A vertical metal electrode 15 of, for example, platinum or titanium, extends downwardly from the positive output connection 12 and is surrounded by a cylindrical sleeve 16 formed of an insulating material. The sleeve 16 is held in position by means of a fastener 17 which is formed with a vent to allow the escape of oxygen generated during an electrolysis operation to the atmosphere. Thus, as oxygen is generated during operation of the electrolysis cell, it will be kept within the confines of the cylindrical sleeve 16 and will rise to the surface of the electrolyte solution within the sleeve 16. It will then exit through the vent in the fastener 17 into the atmosphere.

A second metal electrode 18 of, for example, platinum or titanium, extends downwardly from the negative output connection 13 and, during the supply of power to the electrolysis cell, hydrogen will be formed and will rise to the top of the housing 10 for discharge through the outlet 14.

Thus, during the operation of an internal combustion engine adjacent to which the electrolysis cell is located, a battery (not shown) which supplies power to the internal combustion engine also serves to apply a voltage difference to the two electrodes 15 and 18 so as to generate oxygen which will flow into the atmosphere - with environmental benefits - and hydrogen which will be supplied to the internal combustion engine, thereby improving the efficiency of the engine and reducing the emission of obnoxious exhaust gases such as nitrogen oxides.

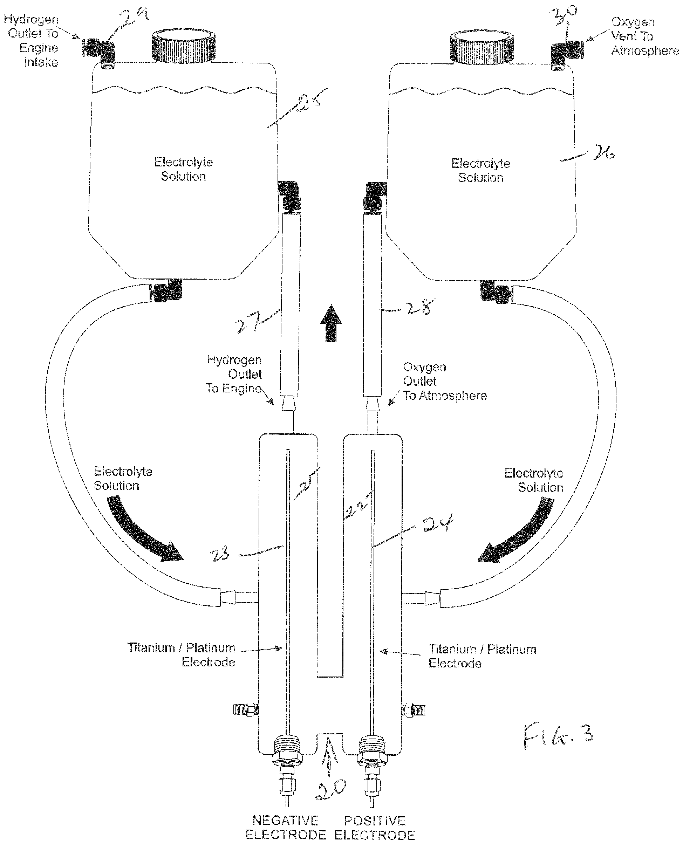

The electrolysis cell shown in Figure 3 includes a housing 20 having two communicating compartments 21 and 22, which are disposed side by side and communicate with one another solely adjacent the lower ends thereof. Compartment 21 contains a negative electrode 23 and compartment 22 contains a positive electrode 24. Electrolyte solution, typically dilute potassium hydroxide solution is supplied to compartment 21 from a chamber 25 and to compartment 22 from a chamber 26. The upper end of compartment 21 is connected to chamber 25 by means of a pipe 27 and the upper end of compartment 22 is connected to chamber 26 by means of a pipe 28.

In operation, a potential difference is established between the two electrodes 23 and 24 with the result that hydrogen is formed in compartment 21 and flows upwardly through pipe 27 into the chamber 25 from which it travels via an outlet connector 29 to the internal combustion engine (not shown). At the same time, oxygen is being formed in compartment 22 and flows upwardly through pipe 28 into the chamber 26 from which it is discharged into the atmosphere via a vent 30.

The present invention thus enables the internal combustion engine to operate more efficiently while having significant environmental benefits.

It will be appreciated that the electrolysis cell having the features described above can be used for generating hydrogen and oxygen for any other purposes in addition to its use in improving the efficiency of an internal combustion engine. For example, the cell may be used for the production of hydrogen for use in space, or for the production of oxygen for medical purposes, e.g. to produce enriched air for people with breathing difficulties.

## Claims

1. A method of improving the efficiency of an internal combustion engine which includes positioning an electrolysis cell adjacent the engine, the electrolysis cell including an elongated positive electrode contained within a sheath the interior of which communicates with the atmosphere to permit the flow of oxygen from the cell into the atmosphere and a negative electrode so arranged as to permit the flow of hydrogen to the internal combustion engine.

2. An electrolysis cell that can be positioned, in use, adjacent an internal combustion engine, the electrolysis cell including an elongated positive electrode contained within a sheath the interior of which communicates with the atmosphere to permit the flow of oxygen from the cell into the atmosphere and a negative electrode so arranged as to permit the flow of hydrogen to the internal combustion engine.

3. An electrolysis cell as claimed in claim 2, which includes a housing in which an electrolyte solution is contained, there being an inlet at the top of the housing for the introduction of the electrolyte into the housing and an outlet at the top of the housing for the flow of hydrogen to the combustion engine.

4. An electrolysis cell as claimed in claim 3, in which the positive electrode is secured in position at the top of the housing by means of a fastener that is formed with a vent to permit the flow of oxygen from within the sheath into the atmosphere.

5. A method of improving the efficiency of an internal combustion engine which includes positioning an electrolysis cell adjacent the engine, the electrolysis cell having two communicating compartments, with an elongated positive electrode contained within one compartment and an elongated negative electrode contained within the other compartment with the arrangement such as to permit the flow of oxygen from the one compartment to the atmosphere and the flow of hydrogen from the other compartment to the internal combustion engine.

6. An electrolysis cell that can be positioned, in use, adjacent an internal combustion engine, the electrolysis cell having two communicating compartments, with an elongated positive electrode contained within one compartment and an elongated negative electrode contained within the other compartment with the arrangement such as to permit the flow of oxygen from the one compartment to the atmosphere and the flow of hydrogen from the other compartment to the internal combustion engine.

7. An electrolysis cell as claimed in claim 6, in which the two compartments are disposed side by side and communicate with one another solely adjacent the lower ends thereof.

8. An electrolysis cell as claimed in claim 7, in which each of the compartments is supplied with electrolyte solution from a separate chamber, with the arrangement such that oxygen is caused to flow from the one compartment to its respective chamber and hydrogen is caused to flow from the other compartment to its respective chamber.
